# EUROPEAN PATENT SPECIFICATION

(11) **EP 1 581 682 B1**
(45) Date of publication and mention of the grant of the patent: **23.04.2008**
(21) Application number: 03796251.1
(22) Date of filing: 17.12.2003
(51) Int. Cl.: D06F 37/30, D06F 58/08

(54) **WASHER/DRYER**
WASCHMASCHINE/WÄSCHETROCKNER
LAVE-LINGE/SECHE-LINGE

(30) Priority: 31.12.2002 TR 200202790
(43) Date of publication of application: 05.10.2005
(73) Proprietor: Arçelik A.S., 34950 Istanbul (TR)
(72) Inventor: AVCI, Serdal Korkut, Tuzla,34950 Istanbul (TR); ALTINSU, Raif, Tuzla, 34950 Istanbul (TR); GÜLAY, Ersan, Tuzla, 34950 Istanbul (TR); DALKILIÇ , Özcan, Tuzla, 34950 Istanbul (TR); ÇETIN, Gürhan, Tuzla 34950 Istanbul (TR)
(86) International application number: PCT/TR2003/000097
(87) International publication number: WO 2004/059066

(56) References cited:
- WO-A-03/018898
- DE-A- 10 054 609
- US-A1- 2002 000 108
- US-B1- 6 531 801
- PATENT ABSTRACTS OF JAPAN vol. 017, no. 647 (C-1135), 2 December 1993 (1993-12-02) & JP 05 208093 A (SHIBAURA ENG WORKS CO LTD), 20 August 1993 (1993-08-20)
- PATENT ABSTRACTS OF JAPAN vol. 018, no. 001 (C-1148), 6 January 1994 (1994-01-06) & JP 05 245290 A (SHIBAURA ENG WORKS CO LTD), 24 September 1993 (1993-09-24)

## Description

This invention relates to a washer/dryer comprising an electric motor comprising the components placed on the drum and the tub in which the drum moves providing the washing by rotating around its axis in a front loaded washer/dryer.

In the state of art, there are various front loaded direct drive washer/dryers providing the activation of the drum together with the stator and the rotor which are mounted on the rear surfaces of the drum and the tub.

In United States Patent US3604222 a washing machine with drum comprising an electric motor consisting of a segmental stator mounted on the tub, a rotor made of magnetic materials placed on the drum at equal intervals and a stator placed on the tub is defined.

In European Patent EP0350429 ,as well as in WO 01/41287 A2, a washer/dryer comprising an asynchronous motor attached directly to the drum shaft is disclosed.

In United Patent US2002/0000108, a washing machine comprising a motor providing movement by means of the rotor and the stator on the tub projection placed in the rear part of the space inside the drum where the shaft around which the drum rotates is defined.

In German Patent document DE19937629, a washing/drying machine comprising a motor having a stator placed on the rear surface of the tub and a rotor placed on the rotation shaft of the drum to move around the stator is defined.

In European Patent document EPO657575, a washing machine comprising a brushless motor operating silently and placed in a isolated protector at the rear part of the tub is disclosed.

In parent documents EP0780507, EPO779388 and US2002/0059817, a washing machine comprising a rotor attached to the drum shaft and a motor which can be moved by means of a stator placed to the rear surface of the tub is defined.

In patent document US3503228, a washing machine comprising a direct-drive motor consisting of metal plates at which the winding activating a vertical pulsator is placed and metal plates placed in a position opposing this group providing the movement is disclosed.

The object of this invention is to provide a washer/dryer driven by a motor comprising a rotor placed around the drum and a stator placed on the tub.

In order to achieve the object of this invention, which is defined by the appended claims, the realized washer/dryer is shown with the attached drawings described below.

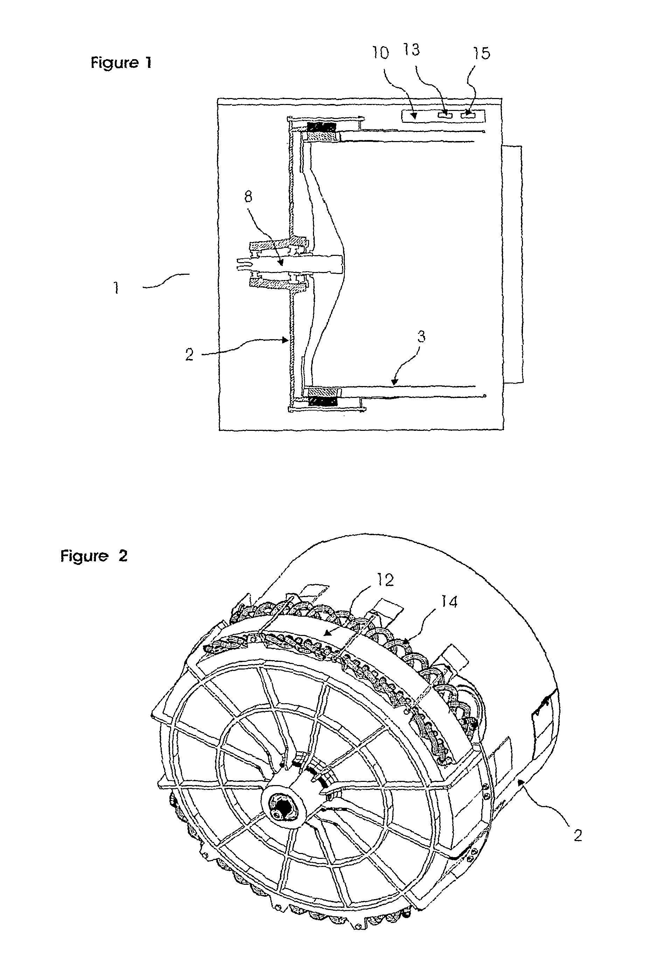

Figure 1 is a schematic view of a washer/dryer having an asynchronous motor comprising a drum, a rotor on the drum, a tub and a stator on the tub,
Figure 2 is a three-dimensional view of a tub comprising a stator where the windings are placed over a stator stack in an arc form.

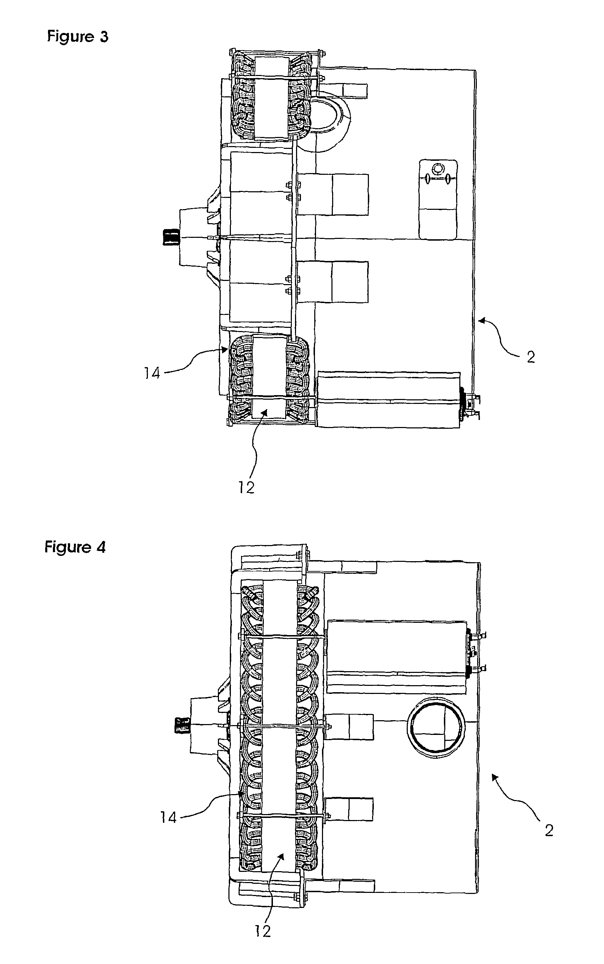

Figure 3 is a side view of a tub comprising a stator covering a part of the periphery of the tub on which it is placed.
Figure 4 is a side view of a tub comprising a stator covering the entire periphery of the tub on which it is placed.

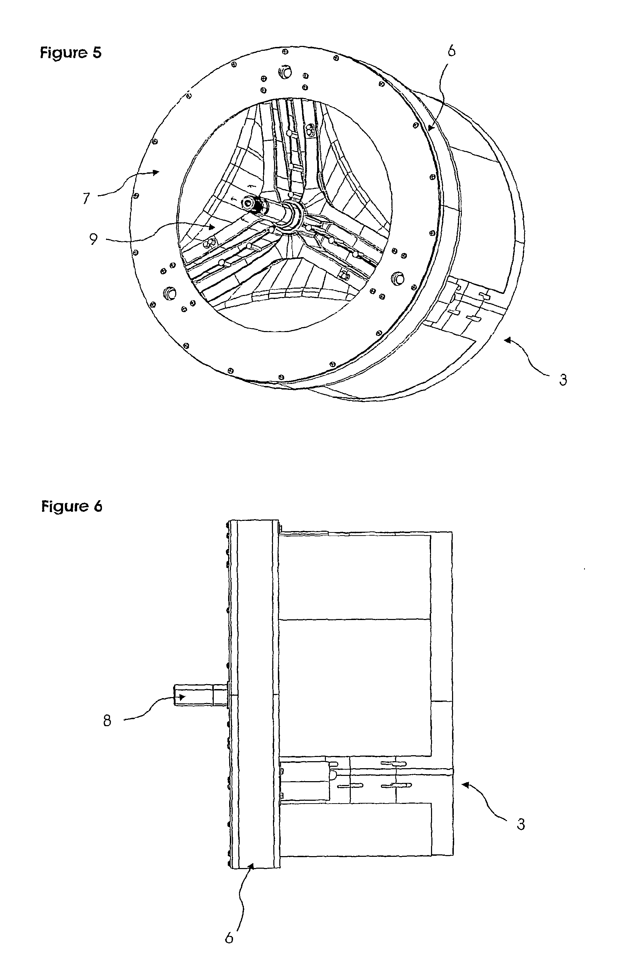

Figure 5 is a three-dimensional view of a drum on which the rotor is placed.
Figure 6 is a side view of a drum on which the rotor is placed.

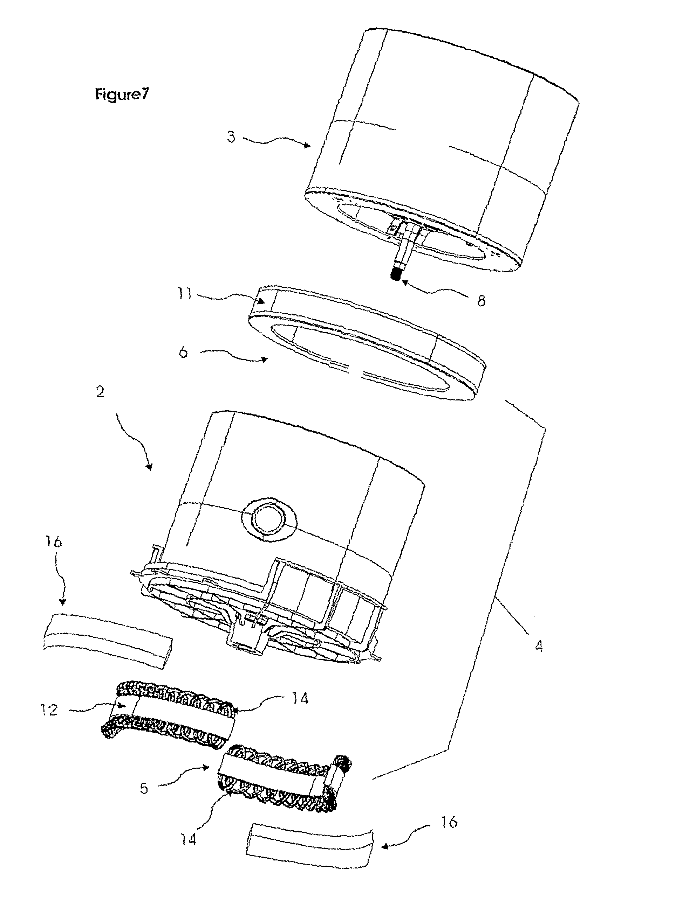

Figure 7 is a detailed three-dimensional view of an asynchronous motor comprising a drum, a tub, a stator having stator stacks in an arc form and a rotor surrounding the drum in a circular form.

The figures have been each numbered corresponding the following:
1. Washer/dryer
2. Tub
3. Drum
4. Asynchronous motor
5. Stator
6. Rotor
7. Support ring
8. Shaft
9. Flange
10. Motor control module
11. Rotor stack
12. Stator stack
13. Rectifier
14. Winding
15. Inverter
16. Protector

The house hold appliances preferably the front loaded washer/dryers comprise a drum (3) in which the laundry is put and which is pivoting around an axis, a tub (2) in which the drum (3) moves, an asynchronous motor (4) moving the drum (3) and a motor control module (10) controlling the asynchronous motor (4).

The asynchronous motor (4) comprises a stator (5) which is placed on the tub (2) fitting the form of the tub (2) and a rotor (6) placed on the drum (3) opposing the stator (5). When the mains voltage is applied, stator (5) forms the magnetic field by means of the current passing over and this field moves the rotor (6) to which the mains voltage is not applied.

The drum (3) comprises a shaft (8) for providing rotation around its axis, one or more flanges (9) rotating itself connected to the shaft (8) without being damaged by the tension on the shaft (8), a circular support ring (7) attached to the flange (9) connected to the shaft (8) at the rear part, providing the rotor (6) with a circular form to rotate without any contact with the tub (2).

The stator (5) comprises one or more stator stacks (12) preferably made of materials with high magnetic level and one or more windings (14) comprising wires wrapped over the stator stack (12) with respect to the dipole and multi pole winding. Stator stack (12) may be in a single circular shape of 360 degrees or comprises stator stacks (12) side by side surrounding the drum (3).

The rotor (6) comprises one or more rotor stacks (11) with a high magnetic level which can create an acceptable magnetic current. In the preferred embodiment, the rotor (6) is composed of plates made of a material having a high magnetic level.

During the operation of the asynchronous motor (4), rotor (6) and stator (5) axially and radially control each other due to their forms and the magnetic field between them. This structure contributes to the continuous and regular operation of the asynchronous motor (4).

Motor control module (10) comprises one or more rectifiers (13) and inverters (15) providing the increase and decrease in the speed of the asynchronous motor (4) and its control.

The asynchronous motor (4) which can be operated at various phases like monophase and triphase comprises one or more multi poles and can be controlled by means of various control methods such as the voltage/frequency (scales) or vector or torque control. In cases where motor is not controlled, one or more pole windings is made to function as a motor control module (10). The number of windings (14) and motor size vary depending on the torque to be applied.

The speed is arranged by changing the voltage/frequency over the stator (5) fed by mains and/or motor control module (10). The control of unbalanced load or excess load and thermal protection are provided by means of the follow up of the stator (5) currents.

In mono phase embodiment of the invention, the washer/dryer (1) is operated by the use of a frequency together with a dipole and voltage from the mains or the motor control module (10).

In the embodiment of the invention with a changeable pole, the asynchronous motor (4) can be controlled by both the motor control module (10) and the winding. In this embodiment the number of poles are optimized with respect to the speed and torque to be used and the structures of the stator (5) and the rotor (6) are formed with respect to these parameters.

In another embodiment of the invention, the energy emerged from the braking during the operation of the motor (4) is stored for being reused by means of the motor control module (10) and returned to the mains. In the preferred embodiment it is returned to the mains.

In another embodiment of the invention, the stator (5) comprises one or more protectors (16) which prevent the effect of the mains voltage on the user. In the preferred embodiment, a protector (16) made of plastic material covering the whole stator (5) is used.

The number of the phases used determines the parameters like the yielded force, rotor (6), stator (5) and sizes of the parts. In the preferred embodiment, the place which the tub (2) of the washer/dryer is minimized by using the stator stacks (12) in the arc form having arc angles of 90-130 degrees placed in an equal way with lower and upper parts of the tub (2) and the transmission is provided from any angular point on the rotor (6) having a circular form covering preferably the whole drum (3).

In an embodiment of the invention, rotor lamination stack (11) having less corrosion property and formed by the lamination of the plates made of stainless steel or materials having high magnetic level such as Copper and Aluminum, is stored as one piece by injecting preferably aluminum or copper around and fixed to the drum (3). In this embodiment the plates are cut to form the rotor lamination stack (11) from a flat sheet in an arc form, arcs are brought side by side to form a rotor at dimensions of the drum and those in spring form are fixed to each other by means of pins, rivets and welding being slide over each other.

In another embodiment of the invention, flange (9) and rotor (6) are each made of aluminum material as one piece and fixed to the drum (3). The rotor lamination stack (11) preferably made of the lamination of steel material is injected with aluminum and flange (9) and rotor (6) are produced as one piece and fixed to the drum (3). In this embodiment, the plates are prepared in a way to surround the drum by being bent from a flat plate to form the rotor lamination stack (11) and rotor is made by sliding their engagement points which are fixed to each other by means of pins, rivets and welding.

In another embodiment of the invention, the flange (9), rotor (6) and support ring (7) are each made of preferably aluminum material as one piece.

In another embodiment of the invention, the rotor (6) is produced with the drum (3) as one piece. In this embodiment the lamination stacks (11) made of plates are placed in the mold and accordingly the drum (3) and the rotor (6) are produced as one piece by being injected preferably plastic material in the mold.

In another embodiment of the invention, the corrosive materials like iron in the rotor (6) which is in contact with the washing water are covered with a material like plastic to prevent the corrosion inside the washer/dryer and which does not stop magnetic field.

Since the asynchronous motor (4) which is the subject of this invention is mounted on the tub (2) and the drum (3), it covers less area on the washer/dryer (1), therefore much laundry is washed and dried by enlarging the sizes of the drum (3) and the tub (2) without changing the outer sizes of the washer/dryer (1).

As the asynchronous motor (4) is silent and preferably frequency controlled, it can be operated at various cycles and rotated in the reverse direction.

In the drum (3) there is no current but magnetic field, the current is only on the stator (5) which is on the tub (2) preventing the possible damage which may affect the user.

Due to the use of the heat emerging from the operation of the washer/dryer in the washing/drying as well; it reduces energy usage from the mains.

Due to the weights of the components forming the rotor (6), there is inertia on the drum (3) which provides the stable operation of the washer/dryer (1). Similarly owing to these weights, the unbalance loads on the washer/dryer are reduced temporarily.

Due to the weights of the components forming the rotor (6) and stator (5),the balance weights placed to prevent the problems resulting from the oscillation during the rotational movement of the washer/dryer (1) are removed and the advantage of utilization of their place is provided.

The surface tension of the water is reduced and by covering the dirt is removed not to cause their adhesion by means of the surface active materials in the ionized detergent and laundry softner chemicals used in the washing/drying cycles in the washer/dryer (1). However calcium/magnesium compounds affecting the hardness of the used water may reduce the activity of the surface active materials. By means of the magnetic field in the washer/dryer (1), the surface tension of the wafer resolution is lowered, its capacity to hold the electricity current is increased, PH level is normalized, capacity for the resolution of ion is increased and surface adhesion features of calcium magnesium compounds are eliminated.

## Claims

1. A washer/dryer (1) comprising a drum (3) in which the laundry is put and which is turning around an axis and a tub (2) in which the drum (3) moves, an asynchronous motor (4) which enables the movement of the drum (3) comprising,
- a stator (5) formed by at least two stator stacks (12) placed on the tub (2) and each having an arc form and made of a material with high magnetic level and one or more windings (14) wounded around the stator stacks (12) in a form suitable to single or multiple speeds, and
- a rotor (6) placed on the drum (3) opposing the stator (5), comprising one or more rotor stacks (11) including one or more laminations which can create an acceptable magnetic current and made of a material having high magnetic level,
said washer/dryer further comprising
- a shaft (8) which rotates around the axis of the drum (3),
and being **characterized by**,
- one or more flanges (9) connected to the shaft (8) and rotating without being damaged by the tension on the shaft (8) and
- a circular support ring (7) attached to the flange (9) connected to the shaft (8) at the rear part rotating around said axis in a way to provide the rotor (6) with a circular form to enable the rotor (6) rotate without any contact with the tub (2).

2. A washer/dryer (1) as in Claim 1 **characterized by** the motor control module (10), which controls the asynchronous motor (4).

3. A washer/dryer (1) as in Claim 2 **characterized by** the motor control module (10) comprising one or more rectifiers (13) and inverters (15) providing the increase and decrease in the speed of the asynchronous motor (4) and its control.

4. A washer/dryer (1) as in Claim 2 **characterized by** the motor control module (10), by means of which which the energy emerged from the braking during the operation of said motor is stored for being reused and/or returned to the mains.

5. A washer/dryer (1) as in Claim 1 **characterized by** one or more protectors (16) which prevent the effect of the mains voltage on the user

6. A washer/dryer (1) as in Claim 1 **characterized by** said flange (9), rotor (6) and support ring (7) being each made of preferably aluminum as one piece.

7. A washer/dryer (1) as in Claim 1 **characterized by** said drum (3) being produced with the rotor (6) as one piece wherein said rotor stacks (11) are placed in the mold and the plastic material being injected into the mold during the production.

## Patentansprüche

1. Wasch-/Trockenmaschine (1) mit einer Trommel (3), in die Wäsche gegeben wird, und die sich um eine Achse dreht, und mit einem Behälter (2), in dem sich die Trommel (3) bewegt, und mit einem Asynchronmotor (4), der die Bewegung der Trommel (3) ermöglicht, umfassend:
- einen Stator (5), der durch wenigstens zwei Statorpakete (12) ausgebildet ist, die an dem Behälter (2) angeordnet sind und jeweils eine Bogenform aufweisen, und aus einem Material mit hoher Magnetisierung hergestellt sind, und eine oder mehrere Wicklungen (14), die in einer Form um die Statorpakete (12) gewickelt sind, die für einzelne oder mehrere Drehzahlen geeignet ist, und
- einen Rotor (6), der an der Trommel (3) gegenüber dem Stator (5) angeordnet ist, und der ein oder mehrere Rotorpakete (11) umfasst, die ein oder mehrere Bleche aufweisen, welche einen passenden Magnetisierungsstrom erzeugen können, und aus einem Material mit einer hohen Magnetisierung hergestellt sind,
wobei die Wasch-/Trockenmaschine ferner umfasst:
- eine Welle (8), die sich um die Achse der Trommel (3) dreht,
und **gekennzeichnet ist durch**
- einen oder mehrere Flansche (9), die mit der Welle (8) verbunden sind und sich drehen, ohne **durch** die Spannung an der Welle (8) beschädigt zu werden, und
- einen kreisförmigen Stützring (7), der an dem Flansch (9) befestigt ist, der mit dem hinteren Teil der Welle (8) verbunden ist, die sich um die Achse dreht, derart, dass dem Rotor (6) eine Kreisform verliehen wird, so dass sich der Rotor (6) drehen kann, ohne in Kontakt mit dem Behälter (2) zu gelangen.

2. Wasch-/Trockenmaschine (1) nach Anspruch 1, **gekennzeichnet durch** ein Motorsteuerungsmodul (10), das den Asynchronmotor (4) steuert.

3. Wasch-/Trockenmaschine (1) nach Anspruch 2, **dadurch gekennzeichnet, dass** das Motorsteuerungsmodul (10) einen oder mehrere Gleichrichter (13) und Umrichter (15) umfasst, welche die Zunahme und die Abnahme der Drehzahl des Asynchronmotors (4) sowie dessen Steuerung bereitstellen.

4. Wasch-/Trockenmaschine (1) nach Anspruch 2, **dadurch gekennzeichnet, dass** von dem Motorsteuerungsmodul (10) die Energie, die während des Betriebs durch das Bremsen erzeugt wird, zur Wiederverwendung und/oder zur Rückführung an das Hauptnetz gespeichert wird.

5. Wasch-/Trockenmaschine (1) nach Anspruch 1, **gekennzeichnet durch** ein oder mehrere Schutzelemente (16), die verhindern, dass die Hauptnetzspannung auf den Benutzer einwirkt.

6. Wasch-/Trockenmaschine (1) nach Anspruch 1, **dadurch gekennzeichnet, dass** der Flansch (9), der Rotor (6) und der Stützring (7) vorzugsweise jeweils einstückig aus Aluminium ausgebildet sind.

7. Wasch-/Trockenmaschine (1) nach Anspruch 1, **dadurch gekennzeichnet, dass** die Trommel (3) einstückig mit dem Rotor (6) ausgebildet ist, wobei während der Herstellung die Rotorpakete (11) in der Form angeordnet werden und Kunststoffmaterial in die Form eingespritzt wird.

## Revendications

1. Machine à laver/sécher (1) comprenant un tambour (3) dans lequel des linges sont mis et qui tourne autour d'un axe et un tube (2) dans lequel le tambour (3) bouge, un moteur asynchrone (4) qui contrôle la mise en mouvement du tambour (3) comprenant,
- un stator (5) muni au moins de deux empilements de stator (12) placés sur le tube (2), chacun de ceux-ci ayant une forme d'arc et étant fait d'un matériau dont le niveau magnétique est élevé et d'un ou plusieurs bobinage (14) rembobiné autour des empilements de stator (12) sous une forme convenable pour un fonctionnement à simple ou plusieurs vitesses, et
- un rotor (6) placé sur le tambour (3) au côté opposé du stator (5), comprenant un ou plusieurs empilements de rotor (11) muni d'un ou plusieurs laminage qui créeraient un courrant magnétique acceptable et seraient fait d'un matériau dont le niveau magnétique est élevé,
ladite machine à laver/sécher comprenant également
- un arbre (8) qui tourne autour de l'axe du tambour (3),
étant **caractérisée par**
- une ou plusieurs flasque (9) liée à l'arbre (8) et tournant sans avoir aucun dommage par la tension de l'arbre (8) et
- un anneau de support circulaire (7) attaché à la flasque (9) liée à l'arbre (8) sur la partie derrière tournant autour dudit axe de façon à assurer que le rotor (6) de forme circulaire active le tour du rotor (6) sans aucun contact avec le tube (2).

2. Machine à laver/sécher (1) selon la Revendication 1 **caractérisée par** le module de contrôle du moteur (10) qui contrôle le moteur asynchrone (4).

3. Machine à laver/sécher (1) selon la Revendication 2 **caractérisée par** le module de contrôle du moteur (10) comprenant un ou plusieurs rectifieur (13) et inverseur (15) assurant l'augmentation et la baisse de la vitesse du moteur asynchrone (4) et son contrôle.

4. Machine à laver/sécher (1) selon la Revendication 2 **caractérisée par** le module de contrôle du moteur (10), à l'aide duquel l'énergie émergée par le freinage durant l'opération dudit moteur est emmagasinée pour être réutilisée et/ou retournée au centre.

5. Machine à laver/sécher (1) selon la Revendication 1 **caractérisée par** un ou plusieurs protecteur (16) qui empêche l'effet du voltage central sur l'utilisateur.

6. Machine à laver/sécher (1) selon la Revendication 1 **caractérisée par** ladite flasque (9), le rotor (6) et l'anneau de support circulaire (7), chacune de ces pièces étant faite de préférence d'aluminium.

7. Machine à laver/sécher (1) selon la Revendication 1 **caractérisée par** ledit tambour (3) produit avec le rotor (6) en une seule pièce dans laquelle lesdits empilements de rotor (11) sont placés dans le moule et le matériau plastique y est injecté dans le moule durant la production.
